# EUROPEAN PATENT SPECIFICATION

(11) **EP 3 065 368 B1**
(45) Date of publication and mention of the grant of the patent: **05.12.2018**
(21) Application number: 15305325.1
(22) Date of filing: 03.03.2015
(51) Int. Cl.: H04L 29/06, H04L 12/841, H04L 12/26, H04L 1/20

(54) **RECEPTION OF DATAGRAMS OF A COHERENT FLOW**
EMPFANG VON DATAGRAMMEN EINES KOHÄRENTEN STROMS
RÉCEPTION DE DATAGRAMMES D'UN ÉCOULEMENT COHÉRENT

(43) Date of publication of application: 07.09.2016
(73) Proprietor: Alcatel Lucent, 91620 Nozay (FR)
(72) Inventor: Leclerc, Brice, 91620 Nozay (FR); Marce, Olivier, 91620 Nozay (FR)
(74) Representative: Nokia EPO representatives

(56) References cited:
- WO-A1-2009/113926
- WO-A1-2011/008789
- US-A1- 2014 281 017

## Description

### FIELD OF THE INVENTION

The invention relates to the technical field of handling of data of dataflows which may suffer jitter. More specifically, it may concern packet-switched communication networks, and more precisely to the reception of datagrams through such networks.

In particular, it concerns the handling at a recipient node of datagrams beholding to a same dataflow, so as to avoid the jitter between datagrams of this dataflow.

### BACKGROUND OF THE INVENTION

Packet-switched communication network are used for applications which require higher and higher quality of service (QoS) and quality of the user experience. These applications comprise video streaming or video-on demand (VoD), video conferencing, online gaming, etc.

From a technical perspective, these applications require that the data are transmitted from the source to the recipient with the smallest transmission time (or "latency") and with good QoS characteristics (jitter, packet loss...), whereas the quantity of data to be transmitted increases year after year both because of the increasing need for quality (high definition videos, etc.) and because of the increasing number of devices connected to the communication networks.

Accordingly, many efforts have been undertaken in the recent years for increasing the bandwidth of the communication networks. In 15 years, it is said that the overall bandwidth has been increased by around 1000 on access, wireless and core networks.

Nonetheless, the end-to-end latency did not follow the same improvement.

Some applications are not very sensitive to latency. For instance, for applications like video streaming or large file downloading, the bandwidth is the major factor but they can experience some end-to-end delay without any negative impact on QoS and user experience.

However, some other applications are on the contrary very sensitive to latency. This is notably the case for applications implying interactivity like online gaming, remote controlling, high-frequency computing, etc. For such applications, the end-to-end transmission time is the crucial factor, with a direct and important negative impact on QoS and user experience.

Therefore, the applications requiring interactivity or, more generally, requiring low latency, face difficulties to be deployed in good conditions. Some ad-hoc solutions (e.g. adapted for given type of applications) are sometimes designed by they cannot be generalized to other applications and are not sufficient in terms of latency reduction.

For example, when it comes to wireless technology, it appears that collaborative MIMO (CoMP, for "Collaborative Multi-Point") requires latency less than 1 ms. However, with regular IP-based networking mechanisms, going below a few milliseconds is challenging. Ad-hoc solutions where the collaborating base stations form a point-to-point mesh connected by fiber are not suitable for a large scale deployment: this would require having fiber installed between all pairs of node! Moreover, this would prevent any evolution of the network technology.

The same problems arise where the data are transmitted from one process to another, without datagrams.

Document US2014/281017 teaches a system in which a server collects QoS and packet delay statistics from the client and uses them to estimate a jitter level at the client. Depending on the jitter level, the server notifies the client to enable or to by-pass its de-jitter buffer.

Also, document WO2011/008789 discloses an application server which acts as conference controller and which decides to enable or by-pass its de-jitter buffer depending on the number of the conference participants.

Finally, document WO2009/113926 discloses a system in which a user is provided with the option to select the de-jitter buffering strategy, i.e., either opt for a smooth playback but with higher overall delays or a low delay playback but with more jitter. The user device adapts the de-jitter buffering accordingly, including applying zero de-jitter buffering.

### SUMMARY OF THE INVENTION

The object of the present invention is to alleviate at least partly the above mentioned drawbacks.

A first object of the invention consists in a method, according to independent claim 1, for handling data of a dataflow at a node, wherein said node comprises a first process applying a first policy consisting in storing into a buffer and, after a delay, forwarding said data to a second process, said method further comprising the detection that a dataflow suffers no jitter and if so, having said first process apply a second policy consisting in directly forwarding data of said dataflow to said second process without any delay.

Preferred embodiments comprise one or more of the following features, which can be taken separately or together, either in partial combination or in full combination:
- said first process determines that a dataflow suffers no jitter but is not already considered as suffering no jitter, and in such a case notifies said second process so that said dataflow becomes considered as suffering no jitter;
- in such a case, said second process enters a transitory phase consisting in consuming data of said dataflow stored within said buffer, while receiving subsequent data directly from said first process;
- said second process chooses the processing to be applied during said transitory phase depending on the nature of a recipient application;
- said node comprises a set of layers and said first process belongs to a first layer and said second process belongs to an upper layer;
- said upper layer is an application layer;
- said node is a receiving node and wherein said dataflow is transmitted from an emitting node through a packet-switched network;
- data suffering no jitter are a coherent flow.

Another aspect of the invention relates to a computer program product, according to independent claim 7, comprising computer-executable instructions for performing the method as previously described, when run onto a data processing unit.

Another aspect of the invention concerns a node, according to independent claim 8, adapted for handing data of a dataflow, comprising a first process applying a first policy consisting in storing into a buffer and, after a delay, forwarding said data to a second process, and said node being adapted to detect that a dataflow suffers no jitter and if so, to have said first process apply a second policy consisting in directly forwarding data of said dataflow to said second process without any delay.

Preferred embodiments comprise one or more of the following features, which can be taken separately or together, either in partial combination or in full combination:
- said first process is adapted to determine that a dataflow suffers no jitter but is not already considered as suffering no jitter, and in such a case to notify said second process so that said dataflow becomes considered as suffering no jitter;
- in such a case, said second process enters a transitory phase consisting in consuming data of said dataflow stored within said buffer, while receiving subsequent data directly from said first process, and said second process chooses the processing to be applied during said transitory phase depending on the nature of a recipient application;
- said node comprises a set of layers, and said first process belongs to a first layer and said second process belongs to an upper layer;
- said node is a receiving node adapted to receive said dataflow from an emitting node through a packet-switched network;

Another aspect of the invention relates to a communication network, according to claim 11, comprising a node as previously described.

Further embodiments are defined in the dependent claims.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows a very simplified example of a packet-based communication network
Fig. 2 shows results of a simulation enabling comparison between an embodiment of the invention and examples of prior arts.
Fig. 3 shows the availability of the forwarding resources of nodes of a communication network, according to an example of embodiment of the invention.
Fig. 4 depict possible behaviors of the receiving node according to an embodiment of the invention
Fig. 5 shows a simplified functional architecture of the receiving node.
Fig. 6 illustrates a more general embodiment of the invention.

### DETAILED DESCRIPTION OF THE INVENTION

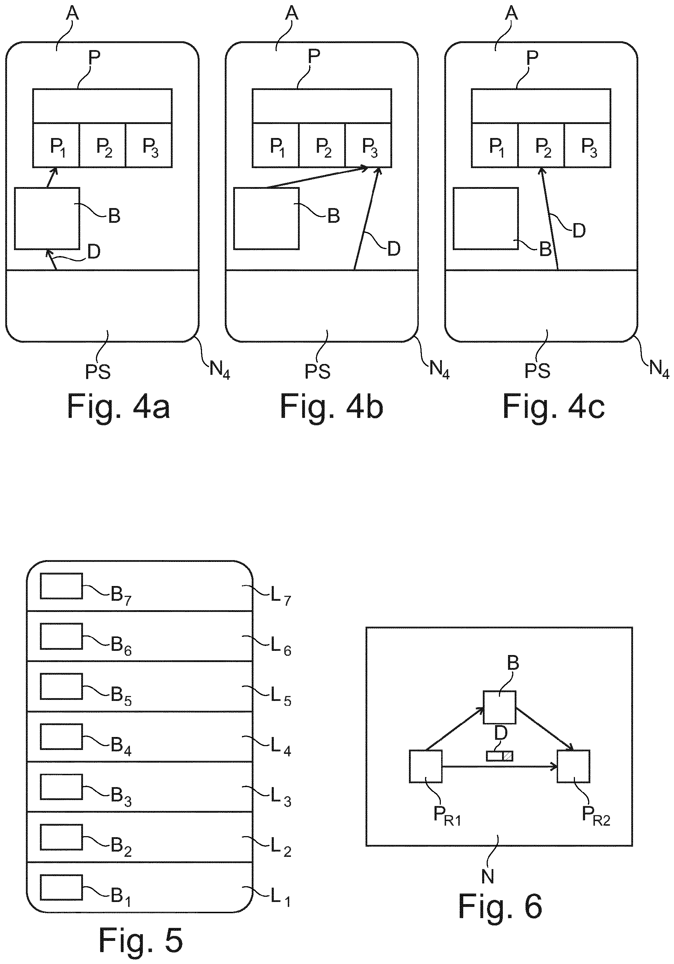

The invention can be embodied by the general and simplified example depicted in FIG. 6.

It consists in a method of handing data of a dataflow at a node, between two (at least) processes Pr1, Pr2. The process Pr1 applies a first "normal" policy consisting in forwarding data through a buffer B to delay them.

According to the invention, the method comprises a step of detecting that a dataflow suffers jitter or not, and if not having the first process Pr1 apply a second policy consisting in directly forwarding data of the dataflow to the second process without any delay.

Directly means that the forwarding does not go through the buffer B, but according to the lower arrow linking process Pr1 to process Pr2.

The invention can be applied in the context of a communication network, wherein the node N is a receiving node, and wherein the coherent flow is transmitted from an emitting node through such a network. In such an embodiment, the node can for instance comprises a set of layers (according to OSI model or Internet model, etc.), and the first and second processes belong respectively to a first layer and to an upper layer. This upper layer is typically the immediate upper layer.

In a communication network, data can be arranged in the form of datagrams.

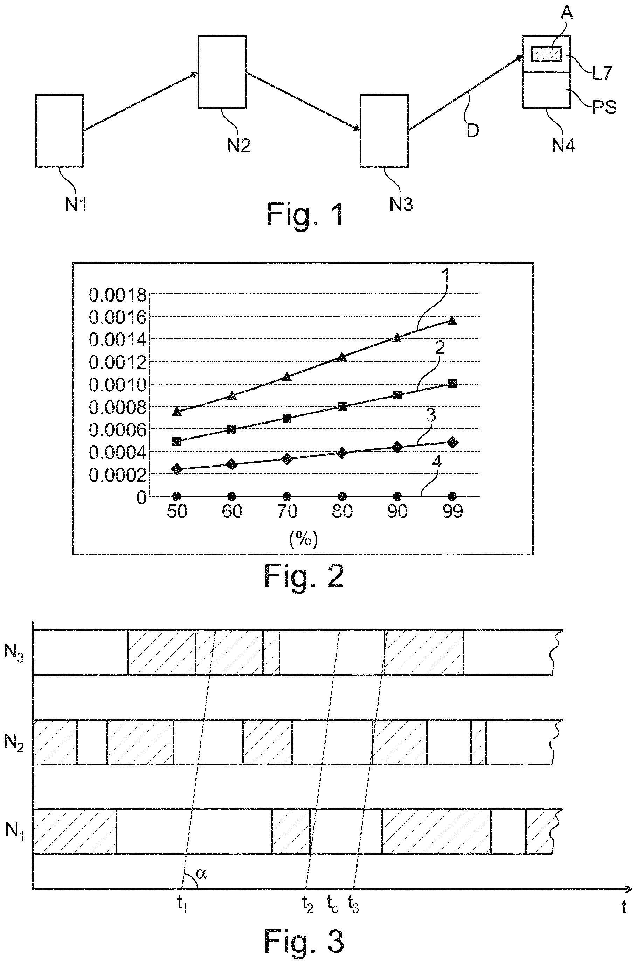

A packet-based communication network is depicted in FIG. 1. Its topology is very simplified for the purpose of clarity of the explanations.

This packet-based communication comprise nodes N1, N2, N3, N4, i.e. network equipments through which are transmitted datagrams between an emitter or source and a receiver or recipient. The emitter N1 and the receiver N4 can be considered as nodes also.

The expression "datagram" means here any atomic data transmission unit, or Protocol Data Unit (PDU), according to any layer, except the physical layer (layer 1). It comprises for instance IP packets (layer 3), frames (layer 2), TCP segments or UDP datagrams (layer 4), etc.

On the node N₄, it has been depicted the protocol stack PS associated with the OSI layers, wherein the upper layer L7 represents the application layer.

Typically, an application A (on layer L7) represents the recipient of a dataflow which is received through the communication network at node N₄ and internally transmitted by the protocol stack PS.

The way the data flow, made of datagrams, is actually transmitted and routed through a path made of nodes is out of the scope of the invention, and, consequently, not further detailed.

The transmission is typically performed along a predetermined path. In the example depicted on FIG. 1, this predetermined path is made of nodes N₁, N₂, N₃, N₄. The way the data flow, made of datagrams, is actually transmitted and routed through a path made of nodes is out of the scope of the invention, and, consequently, not further detailed. The way the path is predetermined is not detailed neither, for the same reasons.

The physical links between the nodes as well as the transmission technology for actually transmitting data over these links are parts of these factors. These considerations concern the layer 1 of the OSI model.

However, the end-to-end transmission time, or latency, has also causes at upper layers of the OSI model. These causes relate to various processing undertaken by the nodes to handle the datagrams.

Among these causes, major ones are collisions of datagrams at one node and buffering. Indeed, as a node may receive data flows from several sources, it implements buffering mechanisms to forward incoming messages into queues in order to manage asynchronously incoming data flows.

Accordingly, many solutions have been designed to react on collisions so as to reduce the buffering and decrease the latency due to multiplexing of forwarded datagrams inside network nodes.

Among these solutions, we can cite:
* Differentiated Services "Expedited Forwarding", as described by RFC 3246 of the IETF (Internet Engineering Task Force)
   DiffServ "Expedited Forwarding" (EF) intends to provide low delay, low jitter and low loss of services by ensuring that the EF aggregates are served at a certain configured rate.
   However this mechanism does not prevent congestion and then does not prevent a given datagram from being delayed: an "Expedited Forwarding" datagram is buffered before being forwarded in case the node has already EF datagrams awaiting to be transmitted.
   Moreover, the applicant considers that the low loss feature is too stringent: Some applications, like interactive applications, do not need the same tradeoff between reliability and latency. For such applications, datagrams can be dropped without jeopardizing the QoS and user experience.
* Another solution is called "Explicit Congestion Notification" and is defined by e.g. RFC 3168 of the IETF. This solution relies on the detection of a congestion situation based on drop decisions taken by a node, and it aims at avoiding that the transport and the application suffer too much losses.
   However, such a solution is only a reaction to correct a congestion situation, and does not allow limiting the latency.
* Another solution is described by the 802.1 Qav (Audio-video bridging) and 802.1 Qat (Admission control) IEEE standards. It aims at reliably deliver data with a deterministic low latency and low jitter, by reserving some bandwidth.
   However, bandwidth reservation ensures a deterministic average latency but not a minimal latency, as it does not prevent congestion on output ports at the time a datagram arrives.
   Moreover, as for the RFC 3246 solution, the low loss feature is too stringent.
* Another solution is called "Pseudo wire emulation" and is described by RFC 3985 of the IETF. It consists in emulating the essential behavior of telecommunication services over a packet-switched network. It intends in providing the minimum necessary functionality to emulate the wire with the required degree of faithfulness for the given service definition.

However, timed delivery keeps a constant phase between input and output interfaces of a node for non-continuous messages: it reduces the jitter but does not manage to achieve a minimal latency.

In other words, the solutions in the prior art try to detect congestion issue and to react upon this detection to avoid or limit the effects of congestion. For achieving this, some solutions propose an optimal use of the buffers that are used for forwarding datagrams towards an output interface.

However, at the time of congestion detection, the latency is already impacted. Furthermore, although many research works have been undertaken in this direction, no solution based on optimization of buffer usage has prove to be satisfactory in terms of actual latency reduction.

FIG. 2 shows the results of a simulation. It evaluates the impact of EF flows aggregations coming from 10 input ports toward a given output port in a network equipment when the distribution of the flows between "Expedited Forwarding" (EF) and regular "Best Effort" (BF) is modified for a given traffic. The contention delay for a node (i.e. the latency for one node) is depicted in seconds on a vertical axis as a function of the load of the node, expressed in percentage.

The curves 1, 2, 3 depict the use of the DiffServ EF mechanism with 3 different mixes between "Expedited Forwarding" (EF) and regular "Best Effort" (BF):

| | |
|---|---|
| Curve 1: | EF = 30% and BF = 70% |
| Curve 2: | EF = 20% and BF = 80% |
| Curve 3: | EF = 10% and BF = 90% |

It shows that Expedited Forwarding does not solve the contention issue.

However, the curve 4, representing the latency curve for a node according to the invention, shows no queuing latency, regardless of the load of this node.

For achieving this, the invention is based on the idea of avoiding the use of buffering of the datagrams inside the network node for collision avoidance. In other words, it avoids the queuing of datagrams. Accordingly, the invention is based on a break-through, compared with the prior art solutions trying to optimize the buffer usage.

According to the invention buffering of the incoming datagrams can be avoided thanks to a new method for forwarding them, avoiding also any collisions at output interfaces
Principles of the invention comprise the transmission of coherent flows. Coherent flows can be defined as dataflows wherein data or datagrams are transmitted according to a temporal law. Thanks to the knowledge of this temporal law, the nodes on the path can forward the datagrams without any buffer contention. A coherent flow is then a set of datagrams which arrival times at any node of the path can be known in advance by these nodes, thanks to a temporal law.

This temporal law can be a periodicity (i.e. a streaming of one datagram every x milliseconds), but other temporal law can be designed.

The temporal law can be designed or tuned at the emitting node according to the availability of the forwarding resources of the nodes on the path to the recipient node. The information to determine the availability of the nodes on the path and the temporal law can be shared according to several means, and the invention is independent of these embodiments. For instance, it can be provisioned from a network management unit, or diffused through the path by means of signaling messages, etc.

For instance, a node can transmit information on the availability of its forwarding resources upstream, so that the previous node on the path can tune the emission dates of the datagrams. So as to avoid any contention at its side, it should itself transmit this information upstream. By incremental tunings, the process converges to the establishment of a temporal law compatible with the availabilities of all forwarding resources on the path and subsequent datagrams can be transmitted end-to-end without any contention.

These principles can be understood with the help of the example depicted in FIG. 3. This example relies on the architecture depicted on FIG. 1. It should be understood, however, that this is just an example of architecture, and that the path between the emitting node N1 and the receiving node N4 can be more complex than in this example. Plus, the emitting and receiving nodes can be terminals, but also any nodes beholding to a communication network.

According to an embodiment of the invention, an emission time tₑ can be determined, which corresponds to the available windows of the forwarding resources of each nodes of the path between the emitting and receiving node.

The first step consists in predetermining this path. This step is performed according to routing techniques well known in the art, and, for this reason, it will not be deeply described here.

Once this path determined, the emitting node N₁ should determine the availability of the forwarding resources of each nodes of the path. The path includes the emitting node N₁ itself, since its forwarding resources are impacted in the transmission of the datagram D from end to end. On the contrary, the receiving node N₄ is to be excluded of the predetermined path, since its forwarding resources are not impacted in the transmission of the datagram D. This is based on the fact that the underlying routing mechanism is based on output ports, and the path determined at the emitting node N₁ by the routing algorithms comprise typically the output port of N₁, N₂ and N₃.

Accordingly, the forwarding resources to be considered are those of N₁, N₂, N₃.

However, the node N4 can be included into the determination of an emission time tₑ, so as to take into account the resources of N₄, other than forwarding ones. This is the case for example to have the node N₄ process the packet as soon as it is received. In this case, the processing resources availability of N₄ will be included into the determination of tₑ.

FIG. 3 shows the availability of the forwarding resources of the nodes N₁, N₂, N₃ along the time. The hashed zones correspond to non-availability of the corresponding forwarding resources, i.e. time periods during which the forwarding resources are reserved or busy transmitting other datagrams. The blank zones correspond, on the contrary, to time periods during which the corresponding forwarding resources are not assigned to any particular transmission tasks. They correspond thus to available windows during which any datagram D can be transmitted immediately, without any delay, and without going through any contention buffer.

For instance, the time t₁ corresponds to an available window of the forwarding resources for the nodes N₁ and N₂, but not of the node N₃. Therefore, the time t₁ does not correspond to an eligible available window for each node N₁, N₂, N₃, N₄ of the path.

The time window t₂-t₃ however corresponds to an available window of the forwarding resources of each of the nodes of the path.

In fact, it corresponds to the maximal available window, i.e. the time t₂ and t₃ are selected so that times out of the interval [t₂, t₃] correspond to unavailability of at least one forwarding resources. According to the invention, it is not necessary to determine the maximal available window, neither all the available windows: the determination of any available window (i.e. included into this maximal available window) is sufficient, but the wider it is, the more flexibility is granted to the method of the invention.

It should be further noted that the dotted lines corresponding to the times t₁, t₂ and t₃ are oblique due to the delays at each node due to the transmission time between nodes. The angle α corresponds directly to the transmission delay of the datagram between two subsequent nodes. This angle is depicted as constant for the intelligibility of the figure, but in practice this angle α is not constant for each pair of subsequent nodes, since the distance between them is in general not constant.

The emission time tₑ is determined so as to correspond to this available window. The determination may take into account the transmission duration of the datagram, according to its size, so that the end of the transmission falls also inside the available window [t₂, t₃]

Once the emission time tₑ is determined, the application running on the emitting node N₁ can generate the datagram D so that the forwarding resources of the emitting node can emit them at this emission time tₑ. Then, as a consequence, the datagram D is transmitted along the path without any delay due to contention buffers, since at each node, the forwarding resources are available for immediate emission.

In addition, according to an embodiment, each node on the path could be adapted to detect datagrams beholding to a coherent flow in order to apply a specific treatment and bypass these contention buffers. It optimizes further the traversal time, and the datagram D can be directly transmitted to the corresponding output port upon its reception. This embodiment is possible if the datagram D can be determined by the node as requiring such an immediate treatment. This determination is possible especially when the datagram beholds to a dataflow already known as requiring this behavior.

In such case, even, the forwarding resource can be explicitly or implicitly reserved, locally, so as to keep the correspond windows available for the datagrams of this dataflow.

However, in the art, applications executing on recipient nodes are typically equipped with buffers so as to deal with latency in the reception of datagrams of a dataflow. This is particularly important for applications like video applications to reduce or even cancel the jitter between datagrams.

Typically, as the RTP (Real Time Protocol) used for transporting the video content provides the emission date of each datagram, the recipient application can make use of this knowledge to consume (or un-queue) datagrams from the buffers so that the delay between the processing of 2 datagrams is the same than the delay between the emissions of these datagrams.

But the consequence of such a mechanism is that all the datagrams are delayed. The delay depends on the larger transmission delay of a datagram (e.g. which suffered from the highest contention). The datagrams subsequent to this datagram are buffered in order to be processed at a time compatible with the transmission delay of this most impacted datagram

Furthermore, the advantages provided by the transmission of datagrams as a coherent flow are not used. In other words, the datagrams of a coherent flow are transmitted along the path without any delay due to contention, but would be automatically stored in the buffer of the recipient application at a receiving node according to the state of the art, loosing most of the advantages of the zero-contention transmission down to it.

Accordingly, the invention aims at solving this additional problem by designing a method for receiving datagrams of a coherent flow keeping the advantages of the zero-contention (ZC) transmission until the last hop. More specifically, it consists in handling the buffering of the incoming datagrams in an intelligent way so as to avoid buffering datagrams known to behold to a coherent flow. It can further handle the transitory phase wherein some datagrams of a newly detected coherent flow are still in a buffer whereas subsequent datagrams are not supposed to be buffered anymore.

All these technical problems are of course let unaddressed by the state of the art. They are further problems raised by the zero-contention transmission scheme which is itself new in art.

Nevertheless this problem can exist without zero-contention transmission scheme, for example when the load of the network changes in a way such that a jitter, especially when negative, is introduced, or even when any mean or method is used to prevent contention.

Accordingly, the invention concerns the receiving node N₄ of a dataflow, and a method for such a receiving node to receive this dataflow.

The invention is mainly described with regard to the examples depicted in figures 1, and 4a, 4b, 4c, wherein the interface between the application A and the protocol PS is addressed. However, it should be noted that the invention addresses the general case, which is the interface of any layer and its upper layer, or, more generally the interface between two processes implemented within the node.

As depicted in FIG. 5, the receiving node N may comprise 7 layers L1, L2, L3,... L7, according to a specific OSI-compliant layered model. According to other models, the receiving node N may comprise various numbers of layers. It should be noted, also, that the invention is more general and can apply to non-layered architectures.

The top layer, L7, comprises the application A.

Each of these layers comprises also a buffer, respectively, B1, B2, B3... B7, in which, according to usual practice, datagrams are queued before being forwarded to the upper layer.

For instance, datagrams received at layer L3 can be processed at this layer and stored in the associated buffer B3, before being forwarded to the layer L4.

This mechanism can be performed to one interface within the whole layered architecture of the node, or several or even between all layers of the stack. Typically, each layer applies such a buffering policy consisting in storing during a certain delay datagrams into a buffer before forwarding them to the upper layer.

As it will be further explained according to the examples of FIGS 4a-4c, the invention lies in having datagrams directly forwarded to an upper layer, without any buffering, when the datagram is detected as beholding to a coherent flow.

Turning back to Fig. 1, the receiving node N₄ comprises a upper layer, consisting in the application layer L7, and a lower layer, called protocol stack PS, and which can be made of several layers L1...L6. In this example, this 7-layer architecture complies with the OSI model

Typically, this protocol stack implements various protocols associated with the technology of the packet-switched network through which the dataflow is received from an emitting node N₁.

The protocol stack is adapted for receiving the datagrams received from the packet-switched network and to process them according to the appropriate protocols. Furthermore, the protocol stack PS can apply a buffering policy so as to forward some datagrams to a buffer. As previously explained, this buffer aims at compensating for the jitter between datagrams D of a same dataflow, in case this dataflow is associated to a jitter-sensible application A (like video display, etc.)

The recipient application A is then adapted to consume the datagrams within the buffer. The application is depicted on FIG. 1 on top of the protocol stack PS, in a layer L7 corresponding to the application layer according to the OSI model. This buffering allows de-correlating the rhythm of the arrival of the datagrams of the dataflow (which may suffer from jitter) and the rhythm of consumption by the application A, which can follow the policy of the application. For instance, if the recipient application A is a video display application, it can consume the datagrams D according to the video protocol, so that the video can be displayed to the user at the right rhythm and with the best quality of service.

Furthermore, the receiving node N₄ is adapted for detecting that a dataflow is considered as suffering no jitter. In the present embodiment, it consists in determining whether the dataflow is considered as a coherent dataflow.

This can be implemented by having a memory attached to the protocol stack memorizing identifiers of coherent flows, so that for each incoming datagram D, the protocol stack PS can determine whether it beholds to a known coherent flow or not.

In such a case, the datagram D is consumed directly by the recipient application A of the upper layer L7, i.e. by bypassing the buffer.

Otherwise, the datagram D follows the legacy path and is forwarded to the buffer.

In other words, a dichotomy is made to process differently datagrams beholding to a coherent flow and datagram beholding to a normal dataflow.

This legacy processing also applies to coherent flows which have not been yet considered as a coherent flow. This also applies to any data flow that would benefit from any other mean to prevent jitter, different than coherent flow, but that has not been identified yet. Indeed, according to embodiments, the determination by the receiving node N₄ that a dataflow is a coherent flow can take time, and several datagrams D can be received and processed before the dataflow is detected as coherent. Furthermore, some data flow can be non-coherent during a first period, and become coherent later on.

According to an aspect of the invention, then, the protocol stack PS is further adapted to determine that an incoming dataflow is a coherent flow which has not yet been considered as a coherent flow.

This may be the first datagram of a new dataflow, or this may be because several datagrams should be received before the receiving node can technically determine that the dataflow is coherent, or more generally that it suffers no jitter.

More specifically, several embodiments are possible for a receiving node to determine a new coherent flow.

According to a first embodiment of the invention, the incoming datagrams contain a "tag" indicating that they belong to a coherent flow. Such a tag can be set by the source application at the emitting node. For instance a video streaming coming from a web-camera can be determined by the source application itself as forming a coherent flow, as the web-camera will transmit images at a predetermined rate.

According to another embodiment of the invention, information regarding a coherent flow, including its temporal law, can be provisioned to the network nodes. They can be provisioned by network management systems, for instance in the situation of long-term coherent flow should be established. As examples of such a case, one can cite VPN, leased tunnels, etc.

According to still another embodiment of the invention, the node can be adapted to correlate received datagrams so as to determine some temporal patterns representative of the coherent flow. For instance, datagrams with a same set of information (e.g. source and destination IP or MAC addresses...) and received according to a certain periodicity can be decided forming a coherent data flow.

Once a new coherent flow is determined, the protocol stack PS can notify the recipient application A. The notification can comprise information about this coherent flow. The recipient application A may then instruct the protocol stack PS to consider this dataflow as a coherent flow. The recipient application can furthermore directly consume the subsequent datagrams of this newly-considered coherent flow from the lower layer, i.e. the protocol stack PS here,

Such a mechanism allows the recipient application A to be informed that a dataflow is a coherent flow and to react on this, for example
- by instructing the protocol stack to avoid the legacy behavior and to bypass the buffer, or
- by applying the bypass to its internal buffer itself.

The actual mechanism depends on the implementation and the invention encompasses obviously all these details of implementations.

This allows then the recipient application to take advantage of the zero-contention transmission of the datagrams D and to avoid the latency at reception of them.

When a dataflow is determined as being a coherent flow, the subsequent datagrams D are directly used by the recipient application. However, at this time, some datagrams beholding to the same coherent flow may be stored in the buffer. This may be because the determination has happened after the reception of several datagrams, as previously explained.

In such case, the recipient application A can enter a transitory phase for:
- consuming datagrams of the coherent flow stored within this buffer,
- while receiving subsequent datagrams directly from the protocol stack PS.

FIGS. 4a, 4b, 4c depict possible behaviors of the receiving node N₄ according to an embodiment of the invention.

FIG. 4a represents an establishment phase, during which a coherent flow is received by not yet considered as a coherent flow by the protocol stack PS. The datagram D is thus forwarded to the buffer B and then to the processing core P of the application A.

A processing P1 can be applied to these datagram so as to take into account the fact it has been stored for a certain time and that a jitter may exist with previous and next datagrams of the dataflow.

FIG. 4b represents a transitory phase, wherein the dataflow has just been detected as being a coherent flow. The application A may trigger a dedicated processing P3 for consuming datagrams stored previously in the buffer and receiving datagrams directly from the protocol stack PS.

FIG. 4c represents the cruising phase wherein all datagrams of the coherent flow haven been consumed (i.e. unqueued) in the buffer B. The buffer B is not used anymore for this coherent flow and a process P2 is triggered by the application A to handle only datagrams received from the protocol stack PS.

This processing P2 takes full advantage of the fact that the datagrams are sent from the emitting node without any contention. Accordingly, no treatment to handle jitter is needed, and the processing P2 can be optimized accordingly.

The processing P3 depends on the nature of the recipient application A. More specifically, it may depend on whether the datagrams of the coherent flow are dependent to each other or not, or more generally on whether the data comprises sequences dependent to each others.

In cases wherein the interface which is addressed is lower in the layered model, the nature of recipient application A can still serve as criterion for determining the processing P3.

If there is no dependency between datagrams, the processing P3 may consist in discarding all the datagrams stored in the buffer. It may then handle the datagrams received from the protocol stack PS at the time of their reception.

Alternatively, the processing P3 can process the buffered datagrams.

In case a dependency exists between datagrams, the application should have to apply a specific processing to the buffered datagrams.

This processing may comprise anticipating the consumption of the buffered datagrams so as to catch up the delay and resynchronize on the timing of the subsequent datagrams. The processing P3 may then have to take into account a negative jitter that results from this anticipated unqueing.

Such a dependency may happen in case of a video application, wherein the compression scheme consists in transmitting series of frames. Some frames may be independence to the other ones ("Intra-Coded Frames", in the MPEG format), whereas some other may code differential signals with previous and/or next frames ("Predictive coded Frames", "Bidirectional coded Frames"...). Accordingly, a datagram containing in its payload such a frame can not be treated independently of previous datagrams of the dataflow.

In the case of a video conference application, for instance, the processing P may consist in the following behavior:
a) a picture to be displayed is computed from a datagram received directly from the protocol stack PS and other datagram(s) stored in the buffer and corresponding to a reference or intermediate picture required for elaborating the picture to be displayed.
b) this mechanism reduces latency but introduces a jitter in the normal display of the pictures and the sequence is not fluid. To prevent this, the application A may additionally compute one or more pictures to be displayed between the last picture displayed from the buffer and the first one received directly from the protocol stack.

For example, let's assume that 5 pictures are stored in the buffer B at the time the dataflow is detected as coherent. Then the application A can compute a picture P from the 5 buffered pictures in order to smooth the variation between the last picture displayed and the last picture in the buffer and not yet displayed. This picture P is displayed before displaying the picture computed from the datagrams directly received from the protocol stack, in step a. Moreover the picture computed in step a takes into account this picture computed in step b.

More generally, the processing P3 may consist in creating new content so as to generate a negative jitter.

According to the invention, then, the handling of a dataflow can adapt dynamically to the presence or not of jitter. In case a dataflow is detected as not suffering any jitter, a specific processing can be applied so as to avoid any contention at the receiving process.

According to aspects of the invention, the switch between a first legacy processing to a second adapted processing may be handled as a transitory phase by some specific and dedicated processing.

The invention has been described with reference to preferred embodiments. However, many variations are possible within the scope of the invention, which is only defined by the appended claims.

## Claims

1. Method for handling data (D) of a dataflow at a receiving node (N), wherein said node comprises a first process (Pr1) applying a first policy consisting in storing into a buffer (B) and, after a delay, forwarding said data to a second process (Pr2), said method further comprising the detection that a dataflow transmitted from an emitting node through a packet-switched network suffers no jitter and if so, having said first process apply a second policy consisting in directly forwarding data of said dataflow to said second process without any delay, wherein said detection comprises said receiving node using an internal memory memorizing identifiers of dataflows suffering no jitter, and
, wherein said first process determines that a dataflow suffers no jitter but is not already considered as suffering no jitter by determining a periodicity of datagrams belonging to a same dataflow, and in such a case notifies said second process so that said dataflow becomes considered as suffering no jitter, by having its identifier memorized in said internal memory.

2. Method according to the previous claim, wherein, in such a case, said second process enters a transitory phase consisting in consuming data of said dataflow stored within said buffer, while receiving subsequent data directly from said first process.

3. Method according to the previous claim, wherein said second process chooses the processing to be applied during said transitory phase depending on the nature of a recipient application (A).

4. Method according to any of claims 1 to 3, wherein said node comprises a set of layers (L1, L2, L3... L7), and wherein said first process belongs to a first layer and said second process belongs to an upper layer

5. Method according to the previous claim, wherein said upper layer is an application layer.

6. Method according to the previous claim, wherein data suffering no jitter are a coherent dataflow.

7. Computer program product comprising computer-executable instructions for performing the method according to any of the previous claims, when run onto a data processing unit.

8. Receiving Node (N₄) adapted for handling data (D) of a dataflow transmitted from an emitting node (N₁) through a packet-switched network, said receiving node comprising a first process (Pr1) applying a first policy consisting in storing into a buffer (B) and, after a delay, forwarding said data to a second process (Pr2), and said node being adapted to detect that a dataflow suffers no jitter by using an internal memory memorizing identifiers of dataflows suffering no jitter; and if so, to have said first process apply a second policy consisting in directly forwarding data of said dataflow to said second process without any delay
wherein said first process is adapted to determine that a dataflow suffers no jitter but is not already considered as suffering no jitter by determining a periodicity of datagrams belonging to a same dataflow, and in such a case to notify said second process so that said dataflow becomes considered as suffering no jitter by having its identifier memorized in said internal memory.

9. Node according to the previous claim, wherein, in such a case, said second process is adapted to enter a transitory phase consisting in consuming data of said dataflow stored within said buffer, while receiving subsequent data directly from said first process, and wherein said second process is adapted to choose the processing to be applied during said transitory phase depending on the nature of a recipient application (A).

10. Node according to any of claims 8 to 9, wherein said node comprises a set of layers (L1, L2, L3... L7), and wherein said first process belongs to a first layer and said second process belongs to an upper layer

11. Communication network comprising a node according to any of claims 8 to 10.

## Patentansprüche

1. Verfahren zum Handhaben von Daten (D) eines Datenflusses an einem Empfangsknoten (N), wobei besagter Knoten umfasst einen ersten Prozess (Pr1), angewendet auf eine erste Richtlinie, bestehend im Speichern in einem Puffer (B) und, nach einer Verzögerung, Weiterleiten besagter Daten an einen zweiten Prozess (Pr2), wobei das Verfahren weiterhin umfasst das Erkennen, dass ein Datenfluss, der von einem emittierenden Knoten durch ein paketvermitteltes Netzwerk übertragen wird, keinen Jitter erleidet, und wenn ja, Anwenden durch den ersten Prozess einer zweiten Richtlinie, bestehend in einem direkten Weiterleiten besagten Datenflusses an besagten zweiten Prozess ohne jede Verzögerung, wobei besagtes Erkennen umfasst das Verwenden durch besagten Empfangsknoten eines internen Speichers, der Kennungen von Datenflüssen speichert, welche keinen Jitter erleiden, und wobei besagter erster Prozess bestimmt, ob ein Datenfluss keinen Jitter erleidet, aber noch nicht angesehen wird als ein solcher, der keinen Jitter erleidet, durch Bestimmen einer Periodizität von Datagrammen, die zu demselben Datenfluss gehören, und in einem solchen Falle besagtem zweiten Prozess benachrichtigt, sodass besagter Datenfluss erachtet wird als ein solcher, der keinen Jitter erleidet, dadurch dass seine Kennung in besagtem internen Speicher gespeichert wird.

2. Verfahren nach dem vorhergehenden Anspruch, wobei in einem solchen Fall besagter zweiter Prozess übergeht in eine Übergangsphase, bestehend in dem Verbrauch von Daten besagten Datenflusses, der innerhalb besagten Puffers gespeichert ist, während folgende Daten direkt empfangen werden von besagtem ersten Prozess.

3. Verfahren nach dem vorhergehenden Anspruch, wobei besagter zweiter Prozess auswählt, dass die Verarbeitung während besagter Übergangsphase angewendet wird in Abhängigkeit der Natur der Empfängeranwendung (A).

4. Verfahren nach einem beliebigen der Ansprüche 1 bis 3, wobei besagter Knoten umfasst einen Satz von Schichten (L1, L2, L3... L7), und wobei besagter erster Prozess zu einer ersten Schicht gehört und besagter zweiter Prozess zu einer oberen Schicht gehört.

5. Verfahren nach dem vorhergehenden Anspruch, wobei besagte obere Schicht eine Anwendungsschicht ist.

6. Verfahren nach dem vorhergehenden Anspruch, wobei die Daten, die keinen Jitter erleiden, einen kohärenten Datenfluss darstellen.

7. Computerprogramm-Produkt, umfassend computerausführbare Befehle zum Durchführen des Verfahrens nach einem beliebigen der vorhergehenden Ansprüche, wenn es auf einer Datenverarbeitungseinheit läuft.

8. Empfangsknoten (N4), ausgelegt zum Handhaben von Daten (D) eines Datenflusses, der übertragen wird von einem emittierenden Knoten (N1) durch ein paketvermitteltes Netzwerk, wobei besagter Empfangsknoten umfasst einen ersten (Pr1), der eine erste Richtlinie anwendet, bestehend in dem Speichern in einem Puffer (B) und, nach einer Verzögerung, Weiterleiten besagter Daten an einen zweiten Prozess (Pr2), und wobei besagter Knoten ausgelegt ist zum Erkennen, dass ein Datenfluss keinen Jitter erleidet, durch Verwenden eines internen Speichers, der Kennungen von Datenflüssen speichert; und wenn ja, Anwenden durch besagten ersten Prozess einer zweiten Richtlinie, bestehend in einem direkten Weiterleiten von Daten besagten Datenflusses an besagten zweiten Prozess ohne jede Verzögerung, wobei besagter erster Prozess ausgelegt ist zum Bestimmen, dass ein Datenfluss keinen Jitter erleidet, aber noch nicht angesehen wird als ein solcher, der keinen Jitter erleidet, durch Bestimmen einer Periodizität von Datagrammen, die zu demselben Datenfluss gehören, und in einem solchen Falle besagtem zweiten Prozess benachrichtigt, sodass besagter Datenfluss erachtet wird als ein solcher, der keinen Jitter erleidet, dadurch dass seine Kennung in besagtem internen Speicher gespeichert wird.

9. Knoten nach dem vorhergehenden Anspruch, wobei in solch einem Fall der zweite
Prozess ausgelegt ist zum Eingehen in eine Übergangsphase, bestehend in dem Verbrauch von Daten besagten Datenflusses, die innerhalb besagten Datenpuffers gespeichert sind, während folgende Daten direkt empfangen werden von besagtem ersten Prozess, und wobei besagter zweiter Prozess ausgelegt ist zum Auswählen, dass die Verarbeitung angewendet wird während besagter Übergangsphase in Abhängigkeit der Natur einer Empfängeranwendung (A).

10. Knoten nach einem beliebigen der Ansprüche 8 bis 9, wobei besagter Knoten umfasst einen Satz von Schichten (L1, L2, L3... L7), und wobei besagter erster Prozess zu einer ersten Schicht gehört und besagter zweiter Prozess zu einer oberen Schicht gehört.

11. Kommunikationsnetzwerk, umfassend einen Knoten nach einem beliebigen der Ansprüche 8 bis 10.

## Revendications

1. Procédé de gestion de données (D) d'un flux de données au niveau d'un noeud récepteur (N), dans lequel ledit noeud comprend un premier processus (Pr1) appliquant une première politique consistant à stocker dans une mémoire tampon (B) et, après un délai, transmettre lesdites données à un deuxième processus (Pr2), ledit procédé comprenant en outre la détection du fait qu'un flux de données transmis depuis un noeud émetteur sur un réseau à commutation de paquet ne subit pas de gigue et si c'est le cas, une étape visant à amener ledit premier processus à appliquer une deuxième politique consistant à transmettre directement les données dudit flux de données audit deuxième processus sans aucun délai, ladite détection comprenant l'utilisation par ledit noeud récepteur d'une mémoire interne mémorisant les identifiants des flux de données ne subissant pas de gigue, et
dans lequel ledit premier processus détermine qu'un flux de données ne subit pas de gigue mais n'est pas déjà considéré comme ne subissant pas de gigue en déterminant la périodicité de datagrammes appartenant à un même flux de données, et dans un tel cas notifie ledit deuxième processus de sorte que ledit flux de données soit alors considéré comme ne subissant pas de gigue, grâce à son identifiant mémorisé dans ladite mémoire interne.

2. Procédé selon la revendication précédente, dans lequel, dans un tel cas, ledit deuxième processus entre dans une phase transitoire consistant à consommer des données dudit flux de données stockées dans ladite mémoire tampon, tout en recevant des données subséquentes directement en provenance dudit premier processus.

3. Procédé selon la revendication précédente, dans lequel ledit deuxième processus choisit le traitement à appliquer durant ladite phase transitoire en fonction de la nature de l'application destinataire (A).

4. Procédé selon l'une quelconque des revendications 1 à 3, dans lequel ledit noeud comprend un ensemble de couches (L1, L2, L3...L7), et dans lequel ledit premier processus appartient à une première couche et ledit deuxième processus appartient à une couche supérieure.

5. Procédé selon la revendication précédente, dans lequel ladite couche supérieure est une couche application.

6. Procédé selon la revendication précédente, dans lequel les données ne subissant pas de gigue constituent un flux de données cohérent.

7. Produit-programme informatique comprenant des instructions exécutables par un ordinateur destinées à mettre en oeuvre le processus selon l'une quelconque des revendications précédentes, lorsqu'il est exécuté sur une unité de traitement de données.

8. Noeud récepteur (N₄) adapté pour gérer les données (D) d'un flux de données transmis depuis un noeud émetteur (N₁) sur un réseau à commutation de paquet, ledit noeud récepteur comprenant un premier processus (Pr1) appliquant une première politique consistant à stocker dans une mémoire tampon (B) et, après un délai, transmettre lesdites données à un deuxième processus (Pr2), et ledit noeud étant adapté pour détecter qu'un flux de données ne subit pas de gigue en utilisant une mémoire interne mémorisant les identifiants des flux de données ne subissant pas de gigue ; et si c'est le cas, pour amener ledit premier processus à appliquer une deuxième politique consistant à transmettre directement les données dudit flux de données audit deuxième processus sans aucun délai dans lequel ledit premier processus est adapté pour déterminer qu'un flux de données ne subit pas de gigue mais n'est pas déjà considéré comme ne subissant pas de gigue en déterminant la périodicité de datagrammes appartenant à un même flux de données, et dans un tel cas pour notifier ledit deuxième processus de sorte que ledit flux de données soit alors considéré comme ne subissant pas de gigue grâce à son identifiant mémorisé dans ladite mémoire interne.

9. Noeud selon la revendication précédente, dans lequel, dans un tel cas, ledit deuxième processus est adapté pour entrer dans une phase transitoire consistant à consommer des données dudit flux de données stockées dans ladite mémoire tampon, tout en recevant des données subséquentes directement en provenance dudit premier processus, et dans lequel ledit deuxième processus est adapté pour choisir le traitement à appliquer durant ladite phase transitoire en fonction de la nature de l'application destinataire (A).

10. Noeud selon l'une quelconque des revendications 8 à 9, dans lequel ledit noeud comprend un ensemble de couches (L1, L2, L3...L7), et dans lequel ledit premier processus appartient à une première couche et ledit deuxième processus appartient à une couche supérieure.

11. Réseau de communication comprenant un noeud selon l'une quelconque des revendications 8 à 10.
